(19) **Europäisches Patentamt**
**European Patent Office**
**Office européen des brevets**

(11) **EP 2 724 483 B1**

(12) **FASCICULE DE BREVET EUROPEEN**

(45) Date de publication et mention
de la délivrance du brevet:
**31.10.2018 Bulletin 2018/44**

(51) Int Cl.:
*H04B 10/2581* (2013.01)     *H04J 14/02* (2006.01)
*H04J 14/04* (2006.01)     *H04J 14/06* (2006.01)
*H04B 10/548* (2013.01)     *H04B 10/2507* (2013.01)

(21) Numéro de dépôt: **12730902.9**

(22) Date de dépôt: **22.06.2012**

(86) Numéro de dépôt international:
**PCT/EP2012/062124**

(87) Numéro de publication internationale:
**WO 2012/175697 (27.12.2012 Gazette 2012/52)**

(54) **SYSTEME DE TRANSMISSION SUR FIBRE OPTIQUE MULTI-COEUR**

SYSTEM ZUR ÜBERTRAGUNG ÜBER EINE MEHRADRIGE OPTISCHE FASER

SYSTEM FOR TRANSMISSION OVER A MULTI-CORE OPTICAL FIBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2011 FR 1155537**

(43) Date de publication de la demande:
**30.04.2014 Bulletin 2014/18**

(73) Titulaire: **Institut Mines-Telecom**
**75014 Paris (FR)**

(72) Inventeurs:
• **MUMTAZ, Sami**
**F-78390 Bois D'arcy (FR)**
• **REKAYA-BEN OTHMAN, Ghaya**
**F-92160 Antony (FR)**
• **JAOUEN, Yves**
**F-75019 Paris (FR)**

(74) Mandataire: **Hnich-Gasri, Naïma**
**Marks & Clerk France**
**Immeuble Visium**
**22, avenue Aristide Briand**
**94117 Arcueil Cedex (FR)**

(56) Documents cités:
**US-A1- 2003 123 877**

• **TARIGHAT A ET AL: "Fundamentals and challenges of optical multiple-input multiple-output multimode fiber links [Topics in Optical Communications]", IEEE COMMUNICATIONS MAGAZINE, IEEE SERVICE CENTER, PISCATAWAY, US, vol. 45, no. 5, 1 mai 2007 (2007-05-01), pages 57-63, XP011381851, ISSN: 0163-6804, DOI: 10.1109/MCOM.2007.358849**
• **PETER J WINZER ET AL: "Outage calculations for spatially multiplexed fiber links", OPTICAL FIBER COMMUNICATION CONFERENCE, 2011. TECHNICAL DIGEST. OFC/NFOEC, IEEE, 6 mars 2011 (2011-03-06), pages 1-3, XP031946414, ISBN: 978-1-4577-0213-6**

**Description**

**DOMAINE TECHNIQUE**

La présente invention concerne de manière générale le domaine des télécommunications optiques, et plus particulièrement celles utilisant des fibres optiques de type multi-coeur.

**ÉTAT DE LA TECHNIQUE ANTÉRIEURE**

Les transmissions optiques sur longue distance (quelques centaines à quelques milliers de kms) utilisent des fibres optiques monomode. Celles-ci offrent l'avantage de ne pas présenter de dispersion modale (hormis la dispersion modale de polarisation) et de pouvoir supporter des débits élevés plusieurs dizaines de Gbits/s par longueur d'onde, et ce pour une pluralité de longueurs d'onde.

Toutefois, pour des transmissions sur courtes distances, notamment pour des réseaux locaux large bande (LANs), les fibres multimode ou multi-coeur constituent une alternative particulièrement intéressante car elles permettent d'utiliser des composants de faibles coûts (fibres plastiques ou POF).

Les fibres multi-mode en silice possèdent un coeur de grand diamètre autorisant la propagation de plusieurs modes guidés, notés $L_{\ell p}$ pour une polarisation rectiligne où $\ell$ est l'indice de mode azimutal et $p$ l'indice de mode radial. Le mode $LP_{01}$ est le mode fondamental, le seul à pouvoir se propager dans une fibre monomode. Le nombre total de modes $L_{\ell p}$ dépend des paramètres optogéométriques (diamètre du coeur, profil d'indice notamment). L'information à transmettre est répartie sur les différents modes guidés. La bande passante des fibres multimode est alors limitée par la dispersion intermodale. Les fibres multimode usuelles (coeur de diamètre 62,5 $\mu$m au lieu de 8 à 10 $\mu$m pour les fibres monomode) permettent la propagation de plusieurs centaines de modes.

Lorsque le nombre de modes $L_{\ell p}$ est faible (typiquement de 2 à 10 modes, correspondant à des valeurs du paramètre de fréquence normalisée V < 8), on parle de fibres faiblement multimode ou encore de fibres FMF (*Few-Mode Fiber*).

Dans leurs applications aux télécommunications optiques, les fibres FMF sont exploitées essentiellement pour la propagation selon le mode fondamental.

Les fibres FMF réalisent actuellement un bon compromis entre les fibres monomode et les fibres multi-mode standard (quelques centaines de modes) en ce qu'elles permettent d'atteindre un produit bande passante x longueur de fibre élevé.

La bande-passante des fibres multimode est généralement supérieure à celle des fibres monomode, chaque mode étant séparément modulé et le signal à transmettre étant multiplexé sur les différents modes. Cette bande passante est toutefois limitée par le couplage entre modes $L_{\ell p}$ lors de la propagation (diaphotie inter-mode). En outre, du fait des imperfections et des inhomogénéités de la fibre, les différents modes ne subissent pas la même atténuation. Le différentiel de perte entre les modes $L_{\ell p}$, encore dénommé MDL (*Mode Dispersion Loss*), induit une sensibilité accrue aux sources de bruit, qui peut limiter significativement la portée de ces systèmes.

Les fibres multi-coeur comprennent une pluralité de coeurs (généralement de 2 à 7 coeurs) au sein d'une gaine commune. La dimension des coeurs est suffisamment faible pour ne permettre qu'une propagation monomode dans chacun d'entre eux. A la différence des fibres multimode, celles-ci ne présentent donc pas de dispersion modale. En revanche, les ondes évanescentes créent un couplage entre les différents coeurs (diaphotie inter-coeur), le niveau de diaphotie est d'autant plus élevé que le nombre de coeurs est élevé et la distance inter-coeur est faible. Comme le couplage inter-mode évoqué précédemment, le couplage inter-coeur limite la portée de ces systèmes.

Quel que soit le type de la fibre, une autre limitation de la bande passante est due à la perte dépendante de la polarisation ou PDL (*Polarization Dépendent Loss*) et à la dispersion modale de polarisation ou PMD (*Polarization Mode Dispersion*). En effet, dans une fibre idéale, deux signaux polarisés rectilignement selon deux axes orthogonaux subissent la même atténuation et se propagent à la même vitesse. En pratique cependant, des défauts d'asymétrie et des imperfections aléatoires de la fibre affectent différemment deux polarisations orthogonales et conduisent à une dégradation du signal qui limite le débit maximum que l'on peut atteindre sur la fibre.

Une limitation supplémentaire apparaît lorsque la puissance lumineuse injectée dans la fibre est suffisamment élevée pour y générer des effets non linéaires. Ce sera notamment le cas lorsque l'on doit recourir à des signaux optiques de forte intensité pour compenser l'atténuation de la fibre pour une transmission sur une longue distance.

Cette limitation apparaît notamment lorsque l'on utilise une transmission multiplexée en longueur d'onde ou WDM (*Wavelength Division Multiplexing*).

En effet, une onde de forte intensité transmise à une première longueur d'onde peut modifier par effet Kerr l'indice de la fibre à une seconde longueur d'onde voisine de la première. Plus généralement, lorsque deux ondes se propagent dans une fibre optique, on observe une modulation de phase de l'une en fonction de l'intensité de l'autre et réciproquement. Ce phénomène connu sous la dénomination de modulation croisée de phase ou XPM (*Cross Phase*

*Modulation*) est d'autant plus sensible que les intensités lumineuses en jeu sont importantes et que les longueurs d'onde sont proches. Il affecte donc en premier lieu les systèmes WDM à forte densité spectrale, dits aussi DWDM (*Dense WDM*), opérant sur une longue distance de transmission (*long haul*). Ce phénomène est particulièrement marqué lorsque se propagent dans la fibre à la fois des signaux optiques à faible débit, modulés en intensité, par modulation OOK (*On Off Keying*), et des signaux optiques à fort débit, modulés en phase (PSK) et/ou amplitude (QAM). Le rapport signal sur bruit en réception de ces signaux modulés en phase et/ou amplitude sera d'autant plus dégradé que leur efficacité spectrale, ou de manière équivalente leur ordre de modulation, sera plus élevé(e).

Le problème à la base de l'invention est de s'affranchir des limitations dues à la diaphotie inter-coeur.

Un premier problème subsidiaire est de s'affranchir en outre des phénomènes de perte dépendante de la polarisation (PDL)/dispersion modale de polarisation (PMD) lorsque le système de transmission utilise un multiplexage en polarisation.

Un second problème subsidiaire est de s'affranchir en outre de la modulation croisée (XPM) de phase lorsque le système de transmission utilise un multiplexage en longueur d'onde.

## EXPOSÉ DE L'INVENTION

La présente invention est définie par un système de télécommunication optique sur une fibre multi-coeur tel que défini dans la revendication 1. Des modes de réalisation particuliers sont donnés par les revendications dépendantes.

## BRÈVE DESCRIPTION DES DESSINS

D'autres caractéristiques et avantages de l'invention apparaîtront à la lecture de modes de réalisation préférentiels de l'invention en référence aux figures jointes parmi lesquelles :

Les Fig. 1A et 1B représentent respectivement l'émetteur et le récepteur d'un système de transmission optique sur fibre multi-mode selon un premier exemple utile à la compréhension de l'invention ;
Les Fig. 2A et 2B représentent respectivement l'émetteur et le récepteur d'un système de transmission optique sur fibre multi-mode selon un second deuxième exemple utile à la compréhension de l'invention ;
Les Fig. 3A et 3B représentent respectivement l'émetteur et le récepteur d'un système de transmission optique sur fibre multi-mode selon un troisième exemple utile à la compréhension de l'invention ;
Les Fig. 4A et 4B représentent respectivement l'émetteur et le récepteur d'un système de transmission optique sur fibre multi-coeur selon un premier mode de réalisation de l'invention ;
Les Fig. 5A et 5B représentent respectivement l'émetteur et le récepteur d'un système de transmission optique sur fibre multi-coeur selon un deuxième mode de réalisation de l'invention ;
Les Fig. 6A et 6B représentent respectivement l'émetteur et le récepteur d'un système de transmission optique sur fibre multi-coeur selon un troisième mode de réalisation de l'invention.

## EXPOSÉ DÉTAILLÉ DE MODES DE RÉALISATION PARTICULIERS

L'idée à la base de l'invention est d'utiliser une technique similaire à celle du codage spatio-temporel dans les systèmes multi-antenne ou MIMO (*Multiple In Multiple Out*) pour s'affranchir des phénomènes de diaphotie inter-coeur.

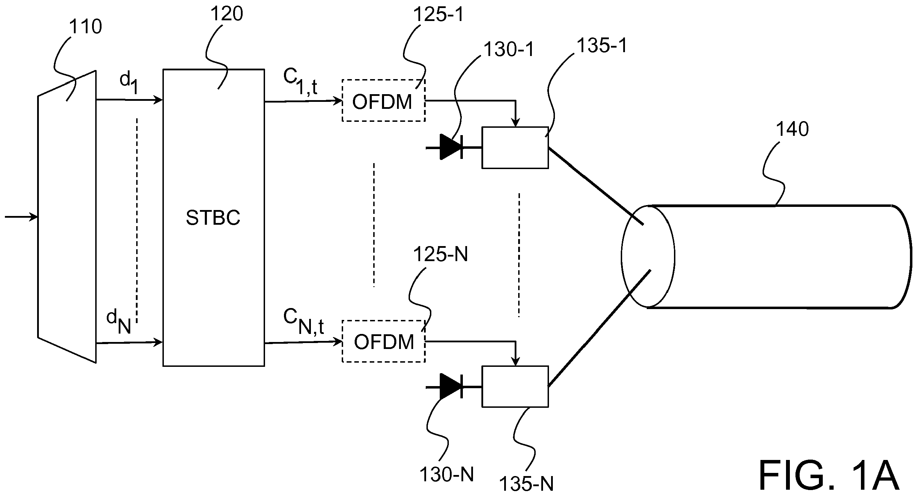

Plus précisément, la Fig. 1A représente l'émetteur d'un système de transmission optique sur fibre multi-mode, selon un premier exemple utile à la compréhension de l'invention. Cette fibre est de préférence faiblement multimode, c'est-à-dire autorise la propagation de 2 à 10 modes au sein de son coeur.

Nous supposerons que l'émetteur doit transmettre un bloc de données pendant un intervalle de transmission ou TTI (*Time Transmission Interval*). Nous noterons $d_1$ à $d_M$ les symboles d'information à transmettre. Le flux de données est démultiplexé en 110, de sorte que les symboles d'information $d_1$ à $d_M$ sont présents à l'entrée du codeur spatio-temporel 120. Ce codeur associe à chaque bloc ou vecteur de symboles $(d_1...,d_M)$ une matrice **C** de taille $N \times T$, dénommée ci-après matrice spatio-temporelle :

$$\mathbf{C} = \begin{pmatrix} c_{1,1} & c_{1,2} & \cdots & c_{1,T} \\ c_{2,1} & c_{2,2} & \cdots & c_{2,T} \\ \vdots & \vdots & \ddots & \vdots \\ c_{N,1} & c_{N,2} & \cdots & c_{N,T} \end{pmatrix} \qquad (1)$$

où les coefficients $c_{n,t}$, $n=1,...,N$, $t=1,..,T$ (avec $N{\geq}2$ et $T{\geq}2$) du code sont en règle générale des coefficients complexes dépendant des symboles d'information, $N$ est le nombre de modes utilisés, $T$ est un entier indiquant l'extension temporelle du code, c'est-à-dire le nombre d'utilisations du canal, en l'occurrence de la fibre.

Le système de transmission optique comprend $N$ lasers 130-n, $n=1,...,N$, de même longueur d'onde ou bien alternativement un seul laser dont le faisceau est divisée en $N$ faisceaux distincts. Dans tous les cas, les faisceaux sont respectivement modulés par les différentes sorties du codeur spatio-temporel. Plus précisément, au temps $t$, le coefficient $c_{n,t}$ module le signal optique du laser 130-n au moyen du modulateur 135-n, par exemple un modulateur Mach-Zehnder, connu en soi. La modulation en question est une modulation en phase et/ou en amplitude. Les types de modulation utilisés pour les différents signaux optiques ne sont pas nécessairement identiques.

Les signaux optiques ainsi modulés excitent chacun un mode de la fibre multi-mode 140. Cette excitation sélective peut être réalisée soit au moyen d'un dispositif optique en espace libre, soit au moyen d'un multiplexeur en optique guidée.

Les $N$ modes utilisés peuvent représenter l'ensemble des modes de la fibre optique. Par exemple, la fibre optique peut être faiblement multi-mode avec $N=3$ ou $N=5$ modes.

Alternativement, les $N$ modes utilisés sont choisis parmi ceux qui sont le plus affectés par la diaphotie intermodale, les autres modes pouvant supporter une modulation directe, c'est-à-dire sans codage spatio-temporel préalable.

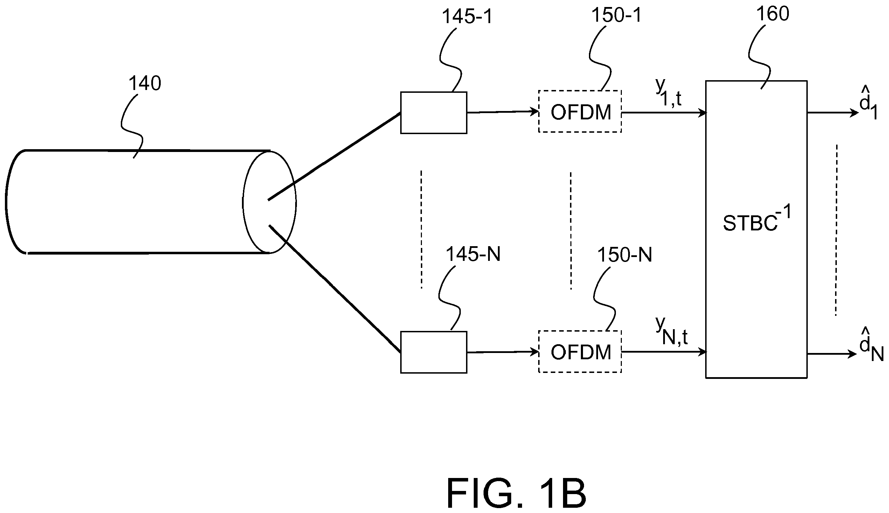

Au niveau du récepteur, comme illustré en Fig. 1B, les différents modes sont spatialement démultiplexés par un dispositif en espace libre à la sortie de la fibre optique 140. Les signaux optiques sont respectivement démodulés dans les démodulateurs 145-n, $n=1,...,N$ pour fournir, à l'instant $t$, des symboles souples, également dénommés ci-après variables de décision $y_{n,t}$ $n=1,..,N$. Ces variables de décision sont ensuite décodées par le décodeur spatio-temporel 160. Plus précisément, le décodeur spatio-temporel utilise les variables de décision $y_{n,t}$ $n=1,..,N$, $t=1,...,T$ relatives à un même intervalle de temps et effectue un décodage par réseau de points, de manière connue en soi, pour en déduire les symboles $\hat{d}_1,..., \hat{d}_M$.

De manière similaire à un système MIMO radiofréquence classique, le système peut acheminer un débit égal à $N$ fois le débit d'une fibre monomode correspondante.

L'exemple décrit ci-dessus suppose que la dispersion intermodale est faible, autrement dit que les différences entre les temps de propagation des différents modes sont faibles. Dans ce cas, les variables de décision $y_{n,t}$ peuvent être échantillonnées de manière synchrone en entrée du décodeur spatio-temporel.

Toutefois, lorsque la dispersion intermodale n'est plus négligeable, c'est-à-dire lorsque la différence de temps de propagation n'est plus faible au regard de la période d'échantillonnage, on a recours à une modulation OFDM (*Orthogonal Frequency Division Multiplexing*) en aval du codeur spatio-temporel 120 et, corrélativement, à une démodulation OFDM en amont du décodeur spatio-temporel 160.

Plus précisément, cette variante a été représentée en pointillés dans la Fig. 1A. Chaque modulateur OFDM 125-n transforme le bloc de coefficients $c_{n,t}$ $t=1,..,T$, ou une pluralité de tels blocs successifs, en un symbole OFDM qui module le signal optique du laser 130-n. De manière symétrique, la sortie du démodulateur optique 150-n est reliée à l'entrée d'un démodulateur OFDM 155-n qui fournit alors la variable de décision $y_{n,t}$. L'intérêt d'utiliser une modulation OFDM est que les différences de temps de propagation entre modes sont alors « absorbées » par les préfixes cycliques des symboles OFDM. La durée du préfixe cyclique est choisie supérieure à la différence de temps de propagation maximale entre modes. Ainsi, en sortie des démodulateurs OFDM 150-n, les variables de décision $y_{n,t}$ sont relatives à un même instant $t$.

Nous décrirons successivement ci-après le codeur et le décodeur spatio-temporels.

De manière classique, le code utilisé par le codeur spatio-temporel est caractérisé par son débit, c'est-à-dire par le nombre de symboles d'information qu'il transmet par instant d'utilisation de canal (PCU). Dans le cas présent, le code sera dit à débit maximal s'il est $N$ fois plus élevé que le débit relatif à un seul mode.

Le codage spatio-temporel pourra être linéaire, autrement dit la matrice **C** du code pourra s'écrire sous la forme :

$$\mathbf{vec}(\mathbf{C}) = \mathbf{Gd} \qquad\qquad (2)$$

où **vec(C)** est le vecteur colonne obtenu en concaténant les vecteurs colonne de la matrice **C**, $\mathbf{d}=(d_1,...,d_M)^T$ et **G** est une matrice de taille $NT{\times}M$, dite matrice génératrice du code.

Selon un premier exemple de codage spatio-temporel linéaire pour un émetteur utilisant deux modes de propagation de la fibre, on pourra utiliser la matrice de codage spatio-temporel proposée par S.M. Alamouti dans son article intitulé « A transmit diversity technique for wireless communications », publié dans IEEE Journal on selected areas in communications, vol. 16, pp. 1451-1458, Oct. 1998. Le code d'Alamouti est défini par la matrice de taille $2{\times}2$:

$$\mathbf{C} = \begin{pmatrix} d_1 & -d_2^* \\ d_2 & d_1^* \end{pmatrix} \qquad (3)$$

où $d_1$ et $d_2$ sont deux symboles d'information à transmettre et $d_1^*$ et $d_2^*$ leurs conjugués respectifs.

Selon un second exemple de réalisation de codage spatio-temporel linéaire, on utilisera avantageusement le code d'or tel que défini dans l'article de J.C. Belfiore et al. intitulé « The golden code : a 2x2 full rate space-time code with nonvanishing déterminants » dont la matrice est donnée par :

$$\mathbf{C} = \begin{pmatrix} \alpha(d_1 + d_2\theta) & \alpha(d_3 + d_4\theta) \\ i\overline{\alpha}(d_3 + d_4\overline{\theta}) & \overline{\alpha}(d_1 + d_2\overline{\theta}) \end{pmatrix} \qquad (4)$$

où $\theta = \dfrac{1+\sqrt{5}}{2}$, $\overline{\theta} = \dfrac{1-\sqrt{5}}{2}$, $i = \sqrt{-1}$, $\alpha = 1+i(1-\theta)$, $\overline{\alpha} = 1+i(1-\overline{\theta})$, où les symboles d'information à transmettre $d_1$ à $d_4$ sont des symboles d'une constellation QAM pouvant s'écrire sous la forme $\lambda + i\mu$ où $\lambda$ et $\mu$ sont des entiers relatifs.

Le code d'or présente l'avantage d'être à débit maximal et à diversité maximale.

Selon un troisième exemple de réalisation de codage spatio-temporel linéaire, on utilisera avantageusement le code d'argent tel que décrit par exemple dans l'article de E. Biglieri et al. intitulé « On fast-decodable space-time block codes » publié dans IEEE Trans. on Inf. Theory, pages 524-530, vol. 55, N°2, Feb. 2009, ou encore dans l'article de G. Rekaya Ben Othman et al. intitulé « Idéal Structure of the silver code », Proc. of ISIT 2009, Seoul, June 28-July 3, 2009, pp. 2818-2822.

La matrice du code d'argent est donnée par :

$$\mathbf{C} = \begin{pmatrix} d_1 & -d_2^* \\ d_2 & d_1^* \end{pmatrix} + \begin{pmatrix} 1 & 0 \\ 0 & -1 \end{pmatrix}\begin{pmatrix} z_1 & -z_2^* \\ z_2 & z_1^* \end{pmatrix} \qquad (5)$$

avec $\begin{pmatrix} z_1 \\ z_2 \end{pmatrix} = \mathbf{U}\begin{pmatrix} d_3 \\ d_4 \end{pmatrix}$ où **U** est la matrice unitaire définie par :

$$\mathbf{U} = \frac{1}{\sqrt{7}}\begin{pmatrix} 1+i & -1+2i \\ 1+2i & 1-i \end{pmatrix} \qquad (6)$$

Le code d'argent présente également l'avantage d'être à débit maximal et à diversité maximale.

Selon un quatrième exemple de réalisation de codage spatio-temporel, on utilise pour un nombre $N$ modes, un code parfait de matrice $N{\times}N$, tel que défini dans l'article de F. Oggier et al. intitulé « Perfect space-time block codes » publié dans IEEE Trans. Inf. Theory, vol. 52, no. 9, pp. 3885-3902, Sept. 2006. On rappelle qu'un code parfait a pour propriétés d'être à plein débit, de présenter un déterminant qui ne tend pas vers zéro lorsque la taille de la constellation de modulation tend vers l'infini, autrement dit un gain supérieur à une borne non nulle indépendante de la constellation de modulation, de présenter une énergie par symbole codé (c'est-à-dire par élément de la matrice) du même ordre que celle des symboles de la constellation, et une même énergie moyenne par symbole codé (la moyenne étant prise sur les $N$ intervalles consécutifs de transmission). On trouvera des exemples de codes parfaits pour un nombre quelconque $N$ de longueurs d'onde (en lieu et place d'antennes) dans l'article de P. Elia et al. intitulé « Perfect space-time codes for any number of antennas » publié dans IEEE Trans. Inf. Theory, vol. 55, no 11, Nov. 2007, pp. 3853-3868.

En tout état de cause, quelle que soit la matrice de codage spatio-temporel utilisée, les perturbations induites par le couplage intermodal sont mises à profit par le codage spatio-temporel pour réduire la sensibilité de la transmission à ces perturbations.

Du côté du récepteur, les démodulateurs 145-n fournissent des symboles souples $y_{n,t}$ (variables de décision).

La démodulation est duale de la modulation effectuée à l'émission. Lorsqu'une modulation OFDM a été effectuée en aval du codage spatio-temporel, une démodulation des symboles OFDM intervient en amont du décodage spatio-temporel, au moyen des démodulateurs OFDM 150-n, ceux-ci fournissant alors les variables de décision $y_{n,t}$. Par souci de simplification, nous omettrons dans la suite l'opération de modulation OFDM à l'émission et de démodulation OFDM à la réception.

Le décodeur spatio-temporel utilise les variables de décision $y_{n,t}$ $n$=1,..,$N$, $t$=1,...,$T$ relatives à différents instants successifs d'utilisation de la fibre pendant un même intervalle de transmission et effectue un décodage par réseau de points, de manière connue en soi, pour en déduire les symboles $\hat{d}_1,... \hat{d}_M$.

Le signal reçu pendant un intervalle de transmission, autrement dit pendant $N$ utilisations successives du canal peut être représenté sous la forme matricielle :

$$\mathbf{Y = HC + N} \qquad (7)$$

où **Y** est la matrice de taille $N{\times}T$ dont les éléments sont les valeurs $y_{n,t}$ $n$=1,..,$N$, $t$=1,...,$T$, **C** est la matrice de codage spatio-temporel utilisé à la réception, **H** est une matrice à coefficients complexes de taille $N{\times}N$ représentative du canal de transmission, et **N** est une matrice de bruit de taille $N{\times}T$.

Si l'on suppose, sans perte de généralité, que le codage spatio-temporel est linéaire, l'expression (7) devient, sous forme vectorielle :

$$\mathbf{vect(Y) = Fd + vec(N)} \qquad (8)$$

où **F** est une matrice de taille $NT{\times}M$ obtenue à partir de la matrice génératrice du code **G** et de la matrice **H**. Les coefficients de **H** peuvent être estimés par le récepteur au moyen de symboles pilote, de manière connue en soi.

L'expression (8) montre que si les symboles $d_1,...,d_M$ appartiennent à une constellation de modulation QAM, le vecteur **vect(Y)** appartient bien à un réseau de points en absence de bruit. Les symboles estimés $\hat{d}_1, ..., d_M$ sont obtenus, grâce au décodeur 160, à partir du point du réseau le plus proche de **vect(Y)** appartenant à la constellation produit.

Selon une variante, le décodeur spatio-temporel peut être à sorties souples en utilisant par exemple un décodeur par sphère à sorties souples du type décrit dans l'article de J. Boutros et al. intitulé « Soft-input soft-output lattice sphere decoder for linear channels », Proc. of the IEEE Globecom '03, encore dénommé décodeur LSD (*List Sphere Decoder*). Un tel décodeur calcule des logarithmes de rapports de vraisemblance, LLR (*Logarithm of Likelihood Ratio*), les probabilités *a posteriori* des bits d'information, à partir d'une liste des points du réseau inclus dans une sphère centrée sur un point représentant le signal reçu ou, de préférence, sur un point du réseau correspondant à une première estimation au sens du maximum de vraisemblance (estimation ML), c'est-à-dire au point de la constellation le plus proche du signal reçu.

Selon une autre variante, le décodeur spatio-temporel pourra avantageusement utiliser un décodeur par sphère à pile, dit encore *Spherical-Bound Stack Decoder,* du type décrit dans l'article de R. Ouertani et al. intitulé « The spherical bound stack decoder » publié dans IEEE International Conf. on wireless and mobile computing, networking and communications, (WiMob), Avignon, France, Octobre 2008 ou dans celui de G. Rekaya Ben-Othman et al. intitulé « Hard and Soft Spherical-Bound Stack decoder for MIMO systems » disponible sur le site www.arxiv.org ou encore décrit dans la demande de brevet FR-A-2930861. Cette variante existe sous forme d'une version à sorties dures ou d'une version à sorties souples.

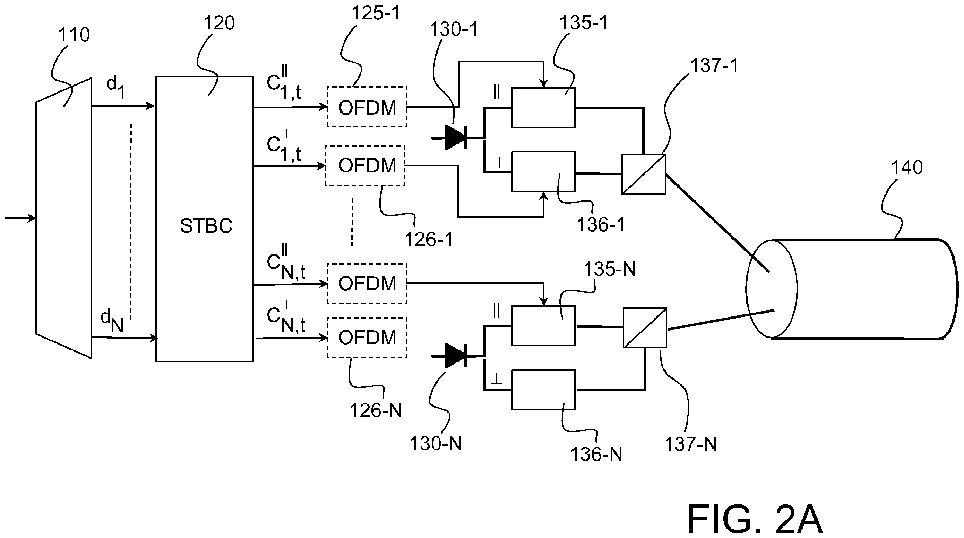

La Fig. 2A représente de manière schématique un système de transmission optique sur fibre multi-mode selon un second exemple utile à la compréhension de l'invention.

Les éléments portant les mêmes numéros de référence ont des fonctions identiques ou similaires.

A la différence du premier exemple, cet émetteur utilise un multiplexage modal et un multiplexage en polarisation.

Plus précisément, l'émetteur comprend une pluralité $N$ de sources laser 130-n et une même pluralité de séparateurs de polarisation (non représentés) fournissant chacun deux polarisations orthogonales, une pluralité 2$N$ de modulateurs, un couple de modulateurs 135-n, 136-n, $n$=1,..,$N,$ modulant les signaux polarisés orthogonalement. Les séparateurs de polarisation peuvent par exemple être des prismes de Wollaston ou des coupleurs à fibre à séparation de polarisation. Selon une variante non représentée, une seule source laser est prévue : le faisceau émis par la source laser polarisée est séparé en deux faisceaux polarisés selon deux directions orthogonales. Ces deux faisceaux sont distribués aux entrées des modulateurs 135-n, 136-n, $n$=1,...,$N$.

Le codeur spatio-temporel 120 code un bloc de symboles $(d_1,..,d_M)$ en une matrice de code **C** de taille *2NxT:*

$$\mathbf{C} = \begin{pmatrix} c_{1,1}^{I\!I} & c_{2,1}^{I\!I} & \cdots & c_{N,1}^{I\!I} \\ c_{1,1}^{\perp} & c_{2,1}^{\perp} & \cdots & c_{N,1}^{\perp} \\ c_{1,2}^{I\!I} & c_{2,2}^{I\!I} & \cdots & c_{N,2}^{I\!I} \\ c_{1,2}^{\perp} & c_{2,2}^{\perp} & \cdots & c_{N,2}^{\perp} \\ \vdots & \vdots & \vdots & \vdots \\ c_{1,T}^{I\!I} & c_{2,T}^{I\!I} & \cdots & c_{N,T}^{I\!I} \\ c_{1,T}^{\perp} & c_{2,T}^{\perp} & \cdots & c_{N,T}^{\perp} \end{pmatrix} \qquad (9)$$

où les coefficients $c_{n,t}^{I\!I}$ et $c_{n,t}^{\perp}$ sont en règle générale des coefficients complexes dépendant des symboles d'information $d_1...,d_M$, le premier servant à moduler une première direction de polarisation du faisceau et le second une seconde direction de polarisation orthogonale à la première. Plus précisément pour chaque mode n, un premier modulateur, 135-n, module la première direction de polarisation à l'aide du coefficient $c_{n,t}^{I\!I}$ et un second modulateur, 136-n, module la seconde direction de polarisation. De préférence, on choisira $T=2N$. Les deux directions de polarisation ainsi modulées sont combinées en 137-n et le signal optique résultant est injecté dans la fibre 140 sous un angle d'incidence choisi de manière à exciter un mode de propagation prédéterminé de la fibre 140.

Le fait d'utiliser deux polarisations orthogonales permet d'atteindre un débit deux fois plus élevé que dans le premier mode de réalisation.

On pourra utiliser notamment comme code un code parfait de matrice $2N \times 2N$ tel que mentionné précédemment. Par exemple, pour deux modes et deux polarisations, on peut utiliser un code parfait de taille $4 \times 4$.

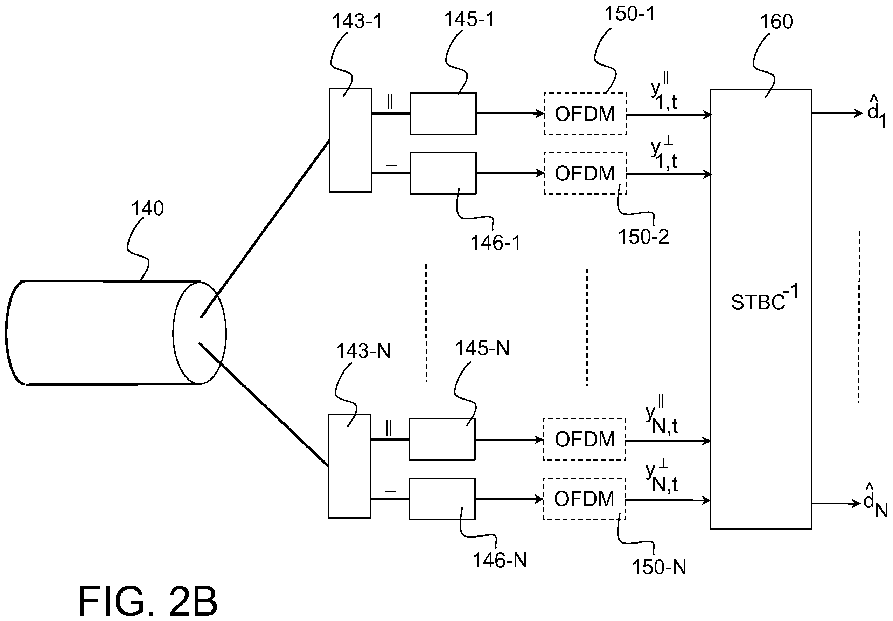

En sortie de la fibre 140, comme indiqué en Fig. 2B, les différents modes sont spatialement démultiplexés en 243-n et les deux polarisations orthogonales sont séparées pour chaque mode. Les $2N$ signaux polarisés obtenus sont démodulés par $2N$ démodulateurs 145-n, 146-n, et, le cas échéant $2N$ démodulateurs OFDM 150-n, 151-n, pour fournir $2N$ variables de décision, $y_{n,t}^{I\!I}$ et $y_{n,t}^{\perp}$, $n=1,...,N$. Ces $2N$ variables de décision sont fournies au décodeur spatio-temporel 160.

Le décodeur spatio-temporel 160 utilise les $2N$ variables de décision $y_{n,t}^{I\!I}$, $y_{n,t}^{\perp}$ $n=1,..,N, t=1,...,T$ relatives à un même intervalle de temps et en déduit une estimation dure des symboles reçus, $\hat{d}_1,...,\hat{d}_M$.

Comme dans le premier exemple, le décodeur 160 met en oeuvre un décodage par réseau de points avec les mêmes variantes que celles exposées ci-dessus.

Enfin, une modulation OFDM peut être prévue en aval du codage spatio-temporel (modulateurs OFDM 125-1 à 125-N) et une démodulation OFDM correspondante en amont du décodage spatio-temporel.

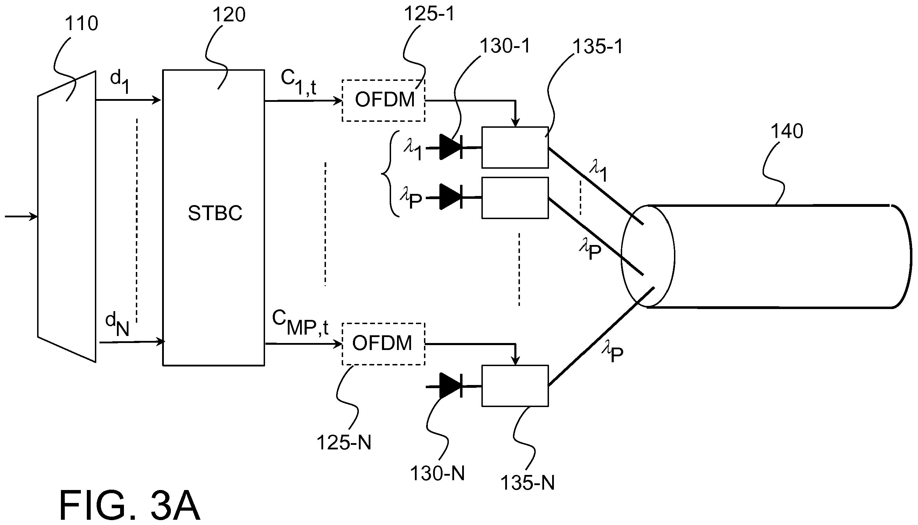

La Fig. 3A représente l'émetteur d'un système de transmission optique sur fibre multimode selon un troisième exemple utile à la compréhension de l'invention.

A la différence des premier et second exemples précités, le troisième mexemple utilise une pluralité de longueurs d'onde.

Dans le système illustré en Fig. 3A, les lasers 130-n, n'ont pas tous la même longueur d'onde. Une pluralité $M$ de modes est ici combinée avec une pluralité $P$ de longueurs d'onde, chaque mode étant associé à $P$ longueurs d'onde avec $N=MP$. Avantageusement, $P$ lasers de longueurs d'onde distinctes seront prévus et le faisceau de chaque laser sera distribué sur les entrées de $M$ modulateurs.

Le codage spatio-temporel (en 120) utilisera avantageusement un code pour canal MIMO parallèle. On rappelle qu'un canal MIMO parallèle est constitué par la concaténation parallèle d'une pluralité de canaux élémentaires. Par exemple, un canal MIMO OFDM utilisant un multiplex de $P$ sous-porteuses peut être considéré comme la mise en parallèle de $P$ systèmes MIMO élémentaires. Avantageusement, les codes pour canal MIMO parallèle sont ceux décrits dans l'article de S. Yang et al. intitulé « Perfect space-time block codes for parallel MIMO channels », publié dans ISIT 2006 Proc., Seattle, pages 1949-1953, incorporé ici par référence. Les codes pour canal MIMO parallèle font appel à une double extension cyclique sur le corps des rationnels, une première extension $K$ de degré $M$ sur et une seconde extension $F$ de degré $P$ sur $K$. Par exemple, si le système de la Fig. 3A met en oeuvre $M=2$ modes et $P=2$ longueurs d'onde, on pourra utiliser le code pour canal MIMO parallèle $(P,M \times M)$ défini par la matrice :

$$\mathbf{X} = \begin{pmatrix} \Xi & 0 \\ 0 & \tau(\Xi) \end{pmatrix} \qquad (10)$$

où :

$$\Xi = \begin{pmatrix} \alpha\left(d_1 + d_2\zeta_8 + d_3\theta + d_4\zeta_8\theta\right) & \alpha\left(d_5 + d_6\zeta_8 + d_7\theta + d_8\zeta_8\theta\right) \\ \zeta_8\overline{\alpha}\left(d_5 + d_6\zeta_8 + d_7\overline{\theta} + d_8\zeta_8\overline{\theta}\right) & \overline{\alpha}\left(d_1 + d_2\zeta_8 + d_3\overline{\theta} + d_4\zeta_8\overline{\theta}\right) \end{pmatrix}$$

$$(11)$$

où $d_i$, $i=1,...,8$ sont les symboles d'information à transmettre (par exemple des symboles d'une constellation QAM ou HEX), $\theta = \dfrac{1+\sqrt{5}}{2}$, $\overline{\theta} = \dfrac{1-\sqrt{5}}{2}$, $i = \sqrt{-1}$, $\alpha = 1+i(1-\theta)$, $\overline{\alpha} = 1+i(1-\overline{\theta})$, $\zeta_8 = e^{i\frac{\pi}{4}}$ $\tau$ est l'opérateur sur l'extension $\left(\zeta_8, \sqrt{5}\right)$ transformant $\zeta_8$ en $-\zeta_8$.

L'homme du métier comprendra que, selon une variante plus complexe, la pluralité de modes peut être conjuguée avec une pluralité de modes et deux polarisations orthogonales, un coefficient en sortie du codeur spatio-temporel modulant alors à l'instant $t$ un mode à une longueur d'onde, polarisé selon l'une des deux directions de polarisation. Dans un tel cas, on utilisera un code pour canal MIMO parallèle ($P,2M \times 2M$).

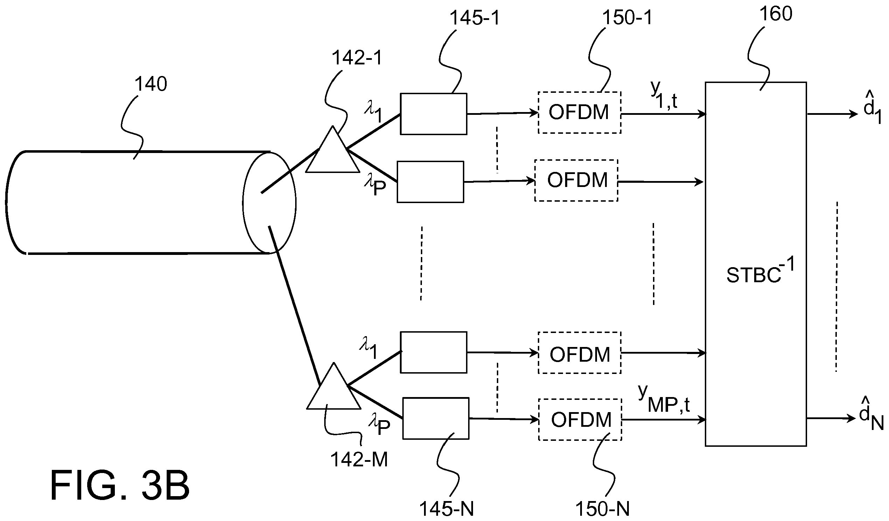

Dans le récepteur illustré en Fig. 3B, les modes sont d'abord spatialement démultiplexés et les différentes longueurs d'onde séparées par un élément de diffraction 142-p, $p=1,...,P$ ou bien par une batterie de filtres interférentiels. Les signaux obtenus sont ensuite démodulés comme précédemment pour fournir les $MP$ variables de décision. Dans le cas de la variante précitée, des analyseurs permettent en outre de séparer les deux polarisations orthogonales. Ils peuvent être situés avant ou après le démultiplexage en longueur d'onde.

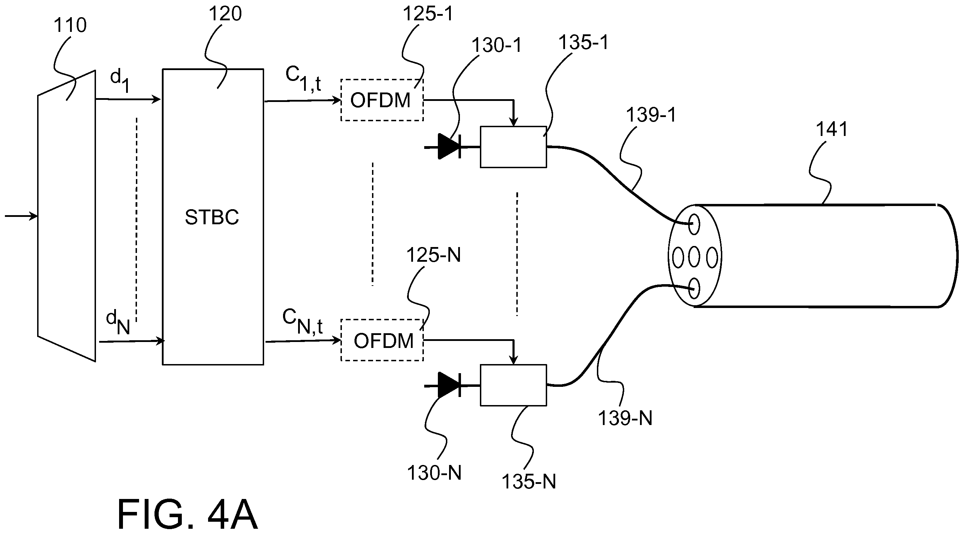

La Fig. 4A représente l'émetteur d'un système de transmission optique sur fibre multi-coeur, selon un premier mode de réalisation de l'invention.

A la différence du premier exemple illustré en Fig. 1A, la fibre utilisée, 141, est de type multi-coeur. Les différents faisceaux modulés, en sortie des modulateurs 135-1 à 135-N, sont injectés dans les différents coeurs, par exemple à l'aide de tronçons de fibre de raccordement monomode 139-1,..,139-N ou bien à l'aide de microlentilles.

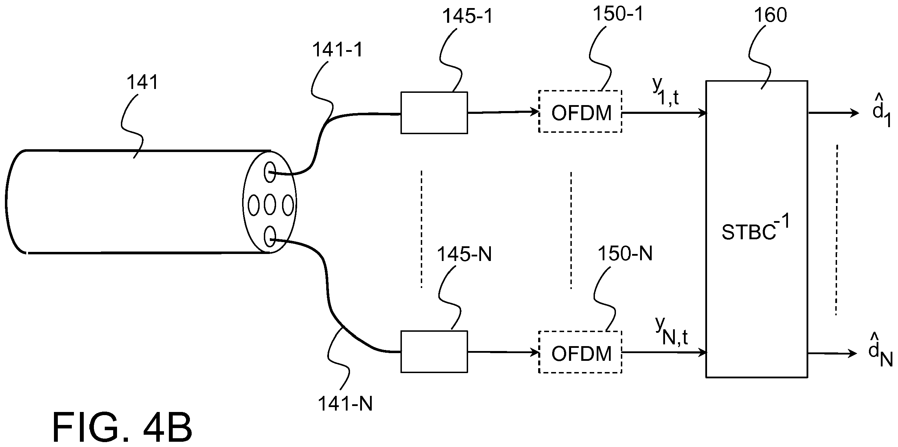

A la réception, comme représenté en Fig. 4B, les faisceaux issus des différents coeurs sont acheminés aux démodulateurs 145-1 à 145-N, par exemple grâce à des tronçons de fibre monomode 141-1 à 141-N. Le reste du récepteur est identique à celui de la Fig. 1B.

On rappelle que les dimensions des coeurs ne permettent que la propagation du mode fondamental.

Le codeur spatio-temporel de la Fig. 4A utilise la même matrice de codage (1) que le premier mode de réalisation et le décodeur spatio-temporel peut être réalisé selon les variantes déjà décrites précédemment.

L'homme du métier comprendra que le codage spatio-temporel de la figure permet de réduire la sensibilité de la transmission au couplage optique entre coeurs.

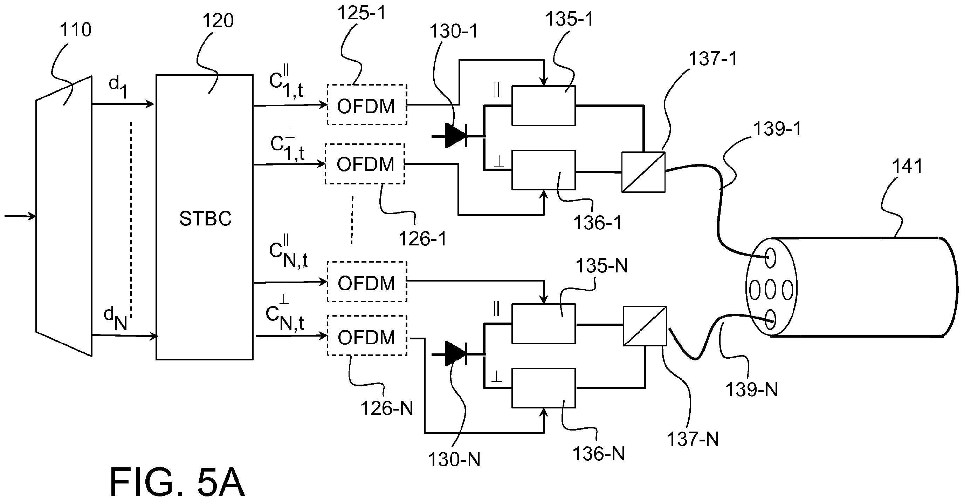

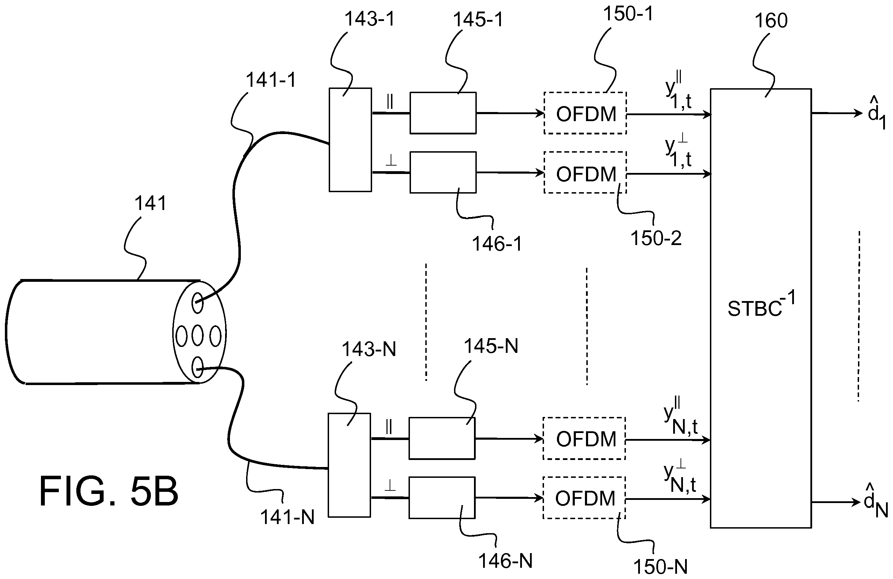

La Fig. 5A représente l'émetteur d'un système de transmission optique sur fibre multi-coeur, selon un deuxième mode de réalisation de l'invention.

Ce mode de réalisation diffère de celui illustré en Fig. 4A en ce qu'il utilise deux polarisations orthogonales par coeur. Les $2N$ sorties $c_n^{II}$, $c_n^{\perp}$, $n=1,...,N$ du codeur spatio-temporel modulent respectivement $N$ faisceaux polarisés selon une première direction et $N$ faisceaux polarisés selon une seconde direction, orthogonale à la première. Pour chaque faisceau, les polarisations orthogonales ainsi modulées sont combinées en 137-n, avant d'être injectées dans la fibre 141. Les faisceaux émis par les lasers 130-1 à 130-n sont polarisés grâce à des polariseurs (non représentés), par exemple des prismes de Wollaston. Selon une variante non représentée, un seul laser est prévu, suivi d'un polariseur, le faisceau polarisé selon la première direction étant distribué sur les entrées des modulateurs 135-1 et le faisceau polarisé selon la seconde direction étant distribué sur les entrées des modulateurs 136-n.

A la réception, les signaux optiques des différents coeurs sont acheminés par des tronçons de fibre monomode 141-1 à 141-N vers les filtres polariseurs 143-1 à 143-N. Les polarisations orthogonales sont ensuite démodulées pour fournir 2*N* variables de décision $y_{n,t}^{II}$, $y_{n,t}^{\perp}$, *n*=1,...,*N* au décodeur spatio-temporel 160, comme dans l'exemple illustré en Fig. 2A.

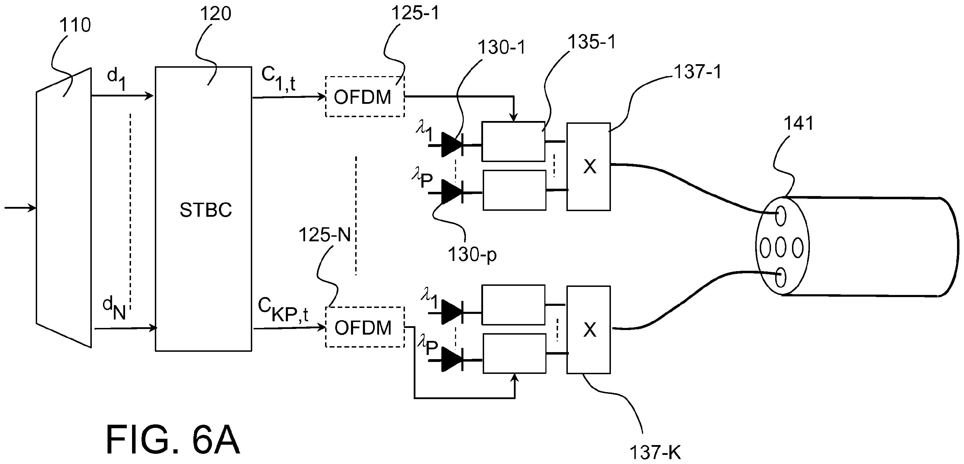

La Fig. 6A représente un émetteur d'un système de transmission optique sur fibre multi-coeur, selon un troisième mode de réalisation de l'invention.

A la différence du premier mode de réalisation, celui-ci utilise une transmission sur une pluralité de longueurs d'onde combinée à une transmission sur une pluralité de coeurs de la fibre 141. Chacun des *K* coeurs de la fibre reçoit un signal optique multiplexé sur les différentes longueurs d'onde. Les coefficients $c_{kp,t}$, *p*=1,...,*P* modulent respectivement *P* faisceaux au temps *t*, les *P* faisceaux ainsi modulés étant multiplexés en 137-k et le signal optique résultant étant injecté dans le coeur *k* de la fibre 141.

Comme dans la Fig. 3A, le code spatio-temporel de la Fig. 6A peut être un code pour canal MIMO parallèle tel que décrit dans l'article précité de S. Yang, par exemple celui défini par les expressions (10) et (11) pour une fibre à *K*=2 coeurs et *P*=2 longueurs d'onde.

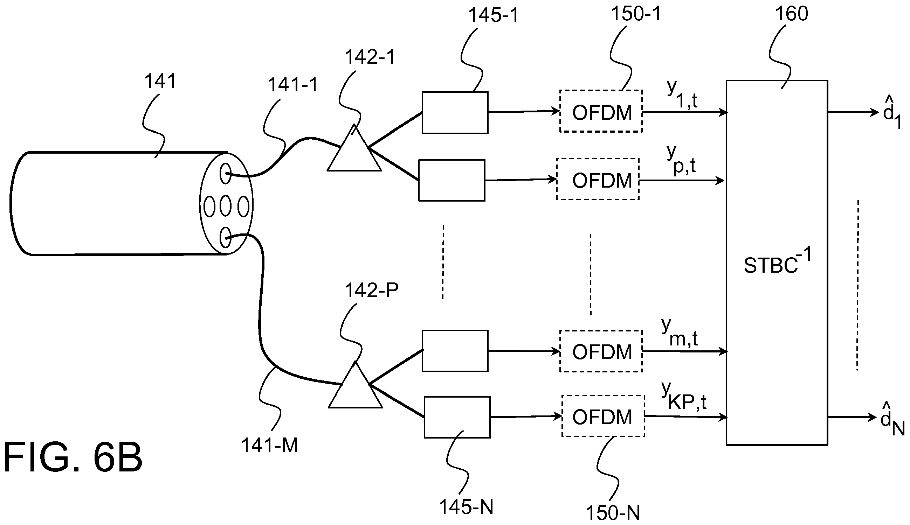

A la réception, comme illustré en Fig. 6B, les signaux optiques des différents coeurs de la fibre 141 sont respectivement acheminés vers les démultiplexeurs en longueur d'onde 141-1 à 141-p (par exemple des réseaux de diffraction). Les signaux optiques aux différentes longueurs d'onde issus des différents coeurs sont démodulés dans les démodulateurs 145-1 à 145-N pour fournir les *N=KP* variables de décision au décodeur spatio-temporel 160.

L'homme du métier comprendra que, selon une variante plus complexe, la transmission via les différents coeurs peut être conjuguée non seulement avec une pluralité de longueurs d'onde et deux polarisations orthogonales. Dans ce cas, un coefficient en sortie du codeur spatio-temporel module à l'instant *t* un signal optique à une longueur d'onde, polarisé selon l'une des deux directions de polarisation orthogonales, à destination de l'un des coeurs. La multiplicité est alors égale à *N=2KP*.

Dans l'ensemble des modes de réalisation précédents, nous avons vu que, selon une variante, une modulation OFDM pouvait être prévue à l'émission, en aval du codage spatio-temporel, lorsque la différence de temps de propagation entre modes ou entre coeurs n'est plus faible au regard de la période d'échantillonnage. De manière symétrique, une démodulation OFDM est alors effectuée à la réception en amont du décodage spatio-temporel.

Une autre variante peut être alternativement envisagée lorsque la différence de temps de propagation entre modes ou dans les coeurs n'est pas négligeable. Selon cette variante, on utilise une famille de codes spatio-temporels asynchrones, décrits dans l'article de M. Sarkiss et al. intitulé « Construction of new delay-tolerant space-time codes » publié dans IEEE Trans. on Information Theory, Juin 2011, Vol. 57, N° 6, pages 3567-3581. Ces codes spatio-temporels conservent leurs propriétés malgré la présence de décalages temporels entre mots de code reçus de différentes antennes. Ils sont construits à l'aide du produit tensoriel d'algèbres cycliques. Par exemple, pour deux modes ou deux coeurs, le code peut être défini par la matrice :

$$\mathbf{C} = \begin{pmatrix} \varepsilon_1 \omega_1 \mathbf{d} & \varepsilon_3 \omega_3 \mathbf{d} \\ \varepsilon_2 \omega_2 \mathbf{d} & \varepsilon_4 \omega_4 \mathbf{d} \end{pmatrix} \qquad (12)$$

où $\mathbf{d} = (d_1,...,d_4)^T$ est le vecteur des symboles d'information à transmettre, et où $\overline{\varepsilon_i}$, *i*=1,...,4 sont des coefficients égaux à 1 à l'exception d'un seul égal à -1, et où $\omega_i$, *i*=1,...,4 sont les vecteurs ligne de la matrice $\Omega$ définie par :

$$\Omega = \frac{1}{\sqrt{10}} \begin{pmatrix} \alpha & \alpha\theta_1 & \alpha\zeta_8 & \alpha\theta_1\zeta_8 \\ \overline{\alpha} & \overline{\alpha}\overline{\theta_1} & \overline{\alpha}\zeta_8 & \overline{\alpha}\overline{\theta_1}\zeta_8 \\ \alpha & \alpha\theta_1 & -\alpha\zeta_8 & -\alpha\theta_1\zeta_8 \\ \overline{\alpha} & \overline{\alpha}\overline{\theta} & -\overline{\alpha}\zeta_8 & -\overline{\alpha}\overline{\theta_1}\zeta_8 \end{pmatrix} \qquad (13)$$

$\alpha, \theta_1, \zeta_8$ ayant déjà été précédemment définis.

**Revendications**

1. Système de télécommunication optique sur une fibre multi-coeur, **caractérisé en ce qu'**il comprend :

- un émetteur (130-1,...,130-N) ;
- une fibre multi-coeur (141) ;
- un codeur (120), dit codeur spatio-temporel, transformant chaque bloc de symboles à transmettre $d_1,...,d_M$ en une matrice de code, chaque élément de ladite matrice étant relatif à un temps d'utilisation et à un coeur de la fibre multi-coeur ;
- une pluralité de modulateurs (135-1 à 135-N) respectivement associés aux différents coeurs, chaque modulateur modulant un faisceau laser émis par ledit émetteur pendant un temps d'utilisation, au moyen d'un élément de la matrice correspondant, les éléments de la matrice du code faisant préalablement l'objet d'une modulation OFDM en amont desdits modulateurs ;
- une pluralité de tronçons de fibre de raccordement monomode (139-1 à 139-N) pour injecter chacun des faisceaux ainsi modulés dans les différents coeurs de la fibre multi-coeur.

2. Système de télécommunication optique selon la revendication 1, **caractérisé en ce que** lesdits modulateurs forment une pluralité de couples (135-n, 136-n), chaque couple correspondant à un coeur de la fibre multi-coeur, un premier modulateur d'un couple configuré pour moduler un premier faisceau polarisé selon une première direction à l'aide d'un premier élément de la matrice de code, un second modulateur dudit couple étant configuré pour moduler un second faisceau polarisé selon une seconde direction, orthogonale à la première, à l'aide d'un second élément de la matrice de code, les premier et second faisceaux polarisés et ainsi modulés étant ensuite combinés par des moyens de combinaison(137-n) en un faisceau résultant et le faisceau résultant étant injecté dans un coeur distinct de la fibre multi-coeur.

3. Système de télécommunication optique selon la revendication 1, **caractérisé en ce que** lesdits modulateurs forment une pluralité de groupes, chaque groupe de modulateurs étant associé à un coeur distinct de la fibre multi-coeur, les modulateurs d'un même groupe étant configurés pour moduler respectivement des faisceaux de longueurs d'onde distinctes à l'aide d'une pluralité d'éléments de la matrice de code, les faisceaux ainsi modulés par les modulateurs d'un groupe étant combinés par des moyens de combinaison en un faisceau résultant et le faisceau résultant étant injecté dans un coeur distinct de la fibre multi-coeur.

4. Système de télécommunication optique selon la revendication 1, **caractérisé en ce que** la matrice de code est celle d'un code à canal MIMO parallèle de dimension $(P, M \times M)$.

5. Système de télécommunication optique selon la revendication 1, **caractérisé en ce que** lesdits modulateurs forment une pluralité de groupes, chaque groupe de modulateurs étant associé à un coeur distinct de la fibre faiblement multimode, ledit groupe se divisant en un premier sous-groupe correspondant à une première direction de polarisation, et un second sous-groupe correspondant à une seconde direction de polarisation, orthogonale à la première direction, les modulateurs du premier sous-groupe étant configurés pour moduler respectivement des faisceaux de longueurs d'onde distinctes, polarisés selon la première direction de polarisation, à l'aide d'une pluralité d'éléments de la matrice de code, et les modulateurs du second sous-groupe étant configurés pour moduler respectivement des faisceaux de mêmes longueurs d'onde, polarisés selon la seconde direction de polarisation, à l'aide d'une même pluralité de seconds éléments de la matrice de code, les faisceaux d'un même groupe étant combinés par des moyens de combinaison en un faisceau résultant et le faisceau résultant étant injecté dans un coeur distinct de la fibre multi-coeur.

6. Système de télécommunication optique selon l'une quelconque des revendications précédentes, **caractérisé en ce que** la matrice du code est celle d'un code parfait.

7. Système de télécommunication optique selon l'une quelconque des revendications 1 à 5, **caractérisé en ce que** la matrice du code est celle d'un code d'argent.

8. Système de télécommunication optique selon l'une quelconque des revendications 1 à 5, **caractérisé en ce que** la matrice du code est celle d'un code d'or.

9. Système de télécommunication optique selon la revendication 1, **caractérisé en ce que** la matrice du code est celle d'un code spatio-temporel asynchrone.

10. Système de télécommunication optique selon l'une des revendications précédentes, **caractérisé en ce qu'**il comprend en outre un récepteur destiné à recevoir un bloc de symboles transmis par l'émetteur, ledit récepteur comprenant en sortie de la fibre multi-coeur une pluralité de fibres monomode pour acheminer les faisceaux issus des différents coeurs de la fibre multi-coeur à une pluralité de démodulateurs (145-n), chaque démodulateur étant configuré pour démoduler le faisceau qu'il reçoit et pour fournir une variable de décision à chaque temps d'utilisation de la fibre, un décodeur par réseau de points (160) étant adapté à recevoir lesdites variables de décision pendant une pluralité d'utilisations de la fibre et à en déduire une estimation des symboles du dit bloc, une démodulation OFDM étant prévue en aval du décodeur par réseau de points.

11. Système de télécommunication optique selon la revendication 10, **caractérisé en ce que** le décodeur par réseau de points est un décodeur par sphère.

12. Système de télécommunication optique selon la revendication 10, **caractérisé en ce que** le décodeur par réseau de points est un décodeur par sphère à pile.

**Patentansprüche**

1. System für optische Nachrichtenübertragung über eine Multikernfaser, **dadurch gekennzeichnet, dass** es umfasst:

   - einen Sender (130-1, ..., 130-N);
   - eine Multikernfaser (141);
   - einen Encoder (120), räumlich-zeitlicher Encoder genannt, der jeden zu übertragenden Zeichenblock $d_1$, ..., $d_M$ in eine Codematrix umwandelt, wobei sich jedes Matrixelement auf eine Nutzungszeit und auf einen Kern der Multikernfaser bezieht;
   - eine Vielzahl von Modulatoren (135-1 bis 135-N), die den jeweiligen unterschiedlichen Kernen zugeordnet sind, wobei jeder Modulator einen während einer Nutzungszeit durch den Sender mittels eines entsprechenden Matrixelements emittierten Laserstrahl moduliert, wobei die Codematrixelemente vorher einer OFDM-Modulation stromaufwärts der Modulatoren unterzogen werden;
   - eine Vielzahl von Monomode-Anschlussfaserabschnitten (139-1 bis 139-N), um jeden der so modulierten Strahlen in die unterschiedlichen Kerne der Multikernfaser einzuspeisen.

2. System für optische Nachrichtenübertragung nach Anspruch 1, **dadurch gekennzeichnet, dass** die Modulatoren eine Vielzahl von Paaren (135-n, 136-n) bilden, wobei jedes Paar einem Kern der Multikernfaser entspricht, wobei ein erster Modulator eines Paars konfiguriert ist, um einen ersten polarisierten Strahl gemäß einer ersten Richtung mit Hilfe eines ersten Codematrixelements zu modulieren, wobei ein zweiter Modulator des Paars konfiguriert ist, um einen zweiten polarisierten Strahl gemäß einer zweiten Richtung senkrecht zu der ersten mit Hilfe eines zweiten Codematrixelements zu modulieren, wobei der erste und der zweite polarisierte und so modulierte Strahl in der Folge durch Kombinationsmittel (137-n) in einen resultierenden Strahl kombiniert werden und der resultierende Strahl in einen individuellen Kern der Multikernfaser eingespeist wird.

3. System für optische Nachrichtenübertragung nach Anspruch 1, **dadurch gekennzeichnet, dass** die Modulatoren eine Vielzahl von Gruppen bilden, wobei jede Gruppe von Modulatoren einem jeweiligen Kern der Multikernfaser zugeordnet ist, wobei die Modulatoren einer selben Gruppe konfiguriert sind, um jeweils Strahlen verschiedener Wellenlängen mit Hilfe einer Vielzahl von Codematrixelementen zu modulieren, wobei die so durch die Modulatoren einer Gruppe modulierten Strahlen durch Kombinationsmittel in einen resultierenden Strahl kombiniert werden und der resultierende Strahl in einen individuellen Kern der Multikernfaser eingespeist wird.

4. System für optische Nachrichtenübertragung nach Anspruch 1, **dadurch gekennzeichnet, dass** die Codematrix diejenige eines parallelen MIMO-Kanalcodes der Größe $(P, M \times M)$ ist.

5. System für optische Nachrichtenübertragung nach Anspruch 1, **dadurch gekennzeichnet, dass** die Modulatoren eine Vielzahl von Gruppen bilden, wobei jede Gruppe von Modulatoren einem individuellen Kern der gering multimodalen Faser zugeordnet ist, wobei sich die Gruppe in eine erste Untergruppe, die einer ersten Polarisationsrichtung entspricht, und in eine zweite Untergruppe unterteilt, die einer zweiten Polarisationsrichtung senkrecht zu der ersten Richtung entspricht, wobei die Modulatoren der ersten Untergruppe konfiguriert sind, um jeweils Strahlen verschiedener Wellenlängen zu modulieren, die mit Hilfe einer Vielzahl von Codematrixelementen gemäß der ersten Polarisationsrichtung polarisiert werden, und die Modulatoren der zweiten Untergruppe konfiguriert sind, um jeweils Strahlen derselben Wellenlänge zu modulieren, die mit Hilfe einer selben Vielzahl von zweiten Codematrixelementen gemäß der zweiten Polarisationsrichtung polarisiert werden, wobei die Strahlen einer selben Gruppe durch Kombinationsmittel in einen resultierenden Strahl kombiniert werden und der resultierende Strahl in einen individuellen Kern der Multikernfaser eingespeist wird.

6. System für optische Nachrichtenübertragung nach einem der vorhergehenden Ansprüche, **dadurch gekennzeichnet, dass** die Codematrix diejenige eines perfekten Codes ist.

7. System für optische Nachrichtenübertragung nach einem der Ansprüche 1 bis 5, **dadurch gekennzeichnet, dass** die Codematrix diejenige eines Silbernen Codes ist.

8. System für optische Nachrichtenübertragung nach einem der Ansprüche 1 bis 5, **dadurch gekennzeichnet, dass** die Codematrix diejenige eines Goldenen Codes ist.

9. System für optische Nachrichtenübertragung nach Anspruch 1, **dadurch gekennzeichnet, dass** die Codematrix diejenigen eines asynchronen räumlich-zeitlichen Codes ist.

10. System für optische Nachrichtenübertragung nach einem der vorhergehenden Ansprüche, **dadurch gekennzeichnet, dass** es ferner einen Empfänger umfasst, der vorgesehen ist, einen durch den Sender übertragenen Zeichenblock zu empfangen, wobei der Empfänger am Ausgang der Multikernfaser eine Vielzahl von monomodalen Fasern umfasst, um die Strahlen, die von unterschiedlichen Kernen der Multikernfaser stammen, zu einer Vielzahl von Demodulatoren (145-n) zu leiten, wobei jeder Demodulator konfiguriert ist, um den Strahl, den er empfängt, zu demodulieren, und um eine Entscheidungsvariable zu jeder Nutzungszeit der Faser zur Verfügung zu stellen, wobei ein Gitter-Decoder (160) angepasst ist, die Entscheidungsvariablen während einer Vielzahl von Verwendungen der Faser zu empfangen und davon eine Abschätzung der Zeichen des Blocks abzuleiten, wobei eine OFDM-Demodulation stromaufwärts des Gitter-Decoders vorgesehen ist.

11. System für optische Nachrichtenübertragung nach Anspruch 10, **dadurch gekennzeichnet, dass** der Gitter-Decoder ein Sphere-Decoder ist.

12. System für optische Nachrichtenübertragung nach Anspruch 10, **dadurch gekennzeichnet, dass** der Gitter-Decoder ein batteriebetriebener Sphere-Decoder ist.

**Claims**

1. A system for optical telecommunication over a multi-core fibre, **characterised in that** it comprises:

   - an emitter (130-1,..., 130-N);
   - a multi-core fibre (141);
   - an encoder (120), called space-time encoder, transforming each block of symbols to be transmitted $d_1,...,d_M$ into a code matrix, each element of said matrix relating to an operating time and to a core of the multi-core fibre;
   - a plurality of modulators (135-1 to 135-N) respectively associated with the various cores, each modulator modulating a laser beam emitted by said emitter during an operating time, by means of a corresponding element of the matrix, the elements of the matrix of the code previously being subject to an OFDM modulation upstream of said modulators;
   - a plurality of sections of single-mode connection fibre (139-1 to 139-N) for injecting each of the beams thus modulated into the various cores of the multi-core fibre.

2. The system for optical telecommunication as claimed in claim 1, **characterised in that** said modulators form a plurality of pairs (135-n, 136-n), each pair corresponding to a core of the multi-core fibre, a first modulator of a pair configured to modulate a first beam polarised in a first direction using a first element of the code matrix, a second modulator of said pair being configured to modulate a second beam polarised in a second direction, orthogonal to the first direction, using a second element of the code matrix, the first and second beams polarised and thus modulated being subsequently combined by combination means (137-n) into a resulting beam and the resulting beam being injected into a distinct core of the multi-core fibre.

3. The system for optical telecommunication as claimed in claim 1, **characterised in that** said modulators form a plurality of groups, each group of modulators being associated with a distinct core of the multi-core fibre, the modulators of a same group being configured to respectively modulate beams with distinct wavelengths using a plurality of elements of the code matrix, the beams thus modulated by the modulators of a group being combined by combination means into a resulting beam and the resulting beam being injected into a distinct core of the multi-core fibre.

4. The system for optical telecommunication as claimed in claim 1, **characterised in that** the code matrix is that of a parallel MIMO channel code of dimension ($P$, $M$ x $M$).

5. The system for optical telecommunication as claimed in claim 1, **characterised in that** said modulators form a plurality of groups, each group of modulators being associated with a distinct core of the weakly multimode fibre, said group dividing into a first sub-group corresponding to a first polarisation direction, and a second sub-group corresponding to a second polarisation direction, orthogonal to the first direction, the modulators of the first sub-group being configured to respectively modulate beams of distinct wavelengths, polarised according to the first polarisation direction, using a plurality of elements of the code matrix, and the modulators of the second sub-group being configured to respectively modulate beams of the same wavelengths, polarised according to the second polarisation direction, using a same plurality of second elements of the code matrix, the beams of a same group being combined by combination means into a resulting beam and the resulting beam being injected into a distinct core of the multi-core fibre.

6. The system for optical telecommunication as claimed in any one of the preceding claims, **characterised in that** the code matrix is that of a perfect code.

7. The system for optical telecommunication as claimed in any one of claims 1 to 5, **characterised in that** the code matrix is that of a silver code.

8. The system for optical telecommunication as claimed in any one of claims 1 to 5, **characterised in that** the code matrix is that of a golden code.

9. The system for optical telecommunication as claimed in claim 1, **characterised in that** the code matrix is that of an asynchronous space-time code.

10. The system for optical telecommunication as claimed in any one of the preceding claims, **characterised in that** it further comprises a receiver intended to receive a block of symbols emitted by the emitter, said receiver comprising, at the output of the multi-core fibre, a plurality of single-mode fibres for routing the beams originating from the various cores of the multi-core fibre to a plurality of demodulators (145-n), each demodulator being configured to demodulate the beam that it receives and to supply a decision variable for each operating time of the fibre, a lattice decoder (160) being adapted to receive said decision variables during a plurality of uses of the fibre and to deduce therefrom an estimate of the symbols of said block, an OFDM demodulation being provided downstream of the lattice decoder.

11. The system for optical telecommunication as claimed in claim 10, **characterised in that** the lattice decoder is a sphere decoder.

12. The system for optical telecommunication as claimed in claim 10, **characterised in that** the lattice decoder is a stack sphere decoder.

FIG. 1A

FIG. 1B

EP 2 724 483 B1

FIG. 2A

EP 2 724 483 B1

FIG. 2B

**FIG. 3A**

FIG. 3B

EP 2 724 483 B1

FIG. 4A

EP 2 724 483 B1

FIG. 4B

FIG. 5A

FIG. 5B

110

120

125-1

130-1

135-1

137-1

141

$d_1$

$C_{1,t}$

OFDM

$\lambda_1$

$\lambda_P$

STBC

125-N

130-p

$d_N$

$C_{KP,t}$

OFDM

$\lambda_1$

$\lambda_P$

X

X

137-K

FIG. 6A

FIG. 6B

EP 2 724 483 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2930861 A

**Littérature non-brevet citée dans la description**

- **S.M. ALAMOUTI.** A transmit diversity technique for wireless communications. *IEEE Journal on selected areas in communications,* Octobre 1998, vol. 16, 1451-1458
- **J.C. BELFIORE et al.** *The golden code : a 2x2 full rate space-time code with nonvanishing déterminants*
- **E. BIGLIERI et al.** On fast-decodable space-time block codes. *IEEE Trans. on Inf. Theory,* Février 2009, vol. 55 (2), 524-530
- **G. REKAYA BEN OTHMAN et al.** Idéal Structure of the silver code. *Proc. of ISIT 2009,* 28 Juin 2009, 2818-2822
- **F. OGGIER et al.** Perfect space-time block codes. *IEEE Trans. Inf. Theory,* Septembre 2006, vol. 52 (9), 3885-3902
- **P. ELIA et al.** Perfect space-time codes for any number of antennas. *IEEE Trans. Inf. Theory,* Novembre 2007, vol. 55 (11), 3853-3868
- **J. BOUTROS et al.** Soft-input soft-output lattice sphere decoder for linear channels. *Proc. of the IEEE Globecom '03*
- **R. OUERTANI et al.** The spherical bound stack decoder. *IEEE International Conf. on wireless and mobile computing, networking and communications, (WiMob),* Octobre 2008
- **G. REKAYA BEN-OTHMAN et al.** *Hard and Soft Spherical-Bound Stack decoder for MIMO systems, www.arxiv.org*
- **S. YANG et al.** Perfect space-time block codes for parallel MIMO channels. *ISIT 2006 Proc.,* 1949-1953
- **M. SARKISS et al.** Construction of new delay-tolerant space-time codes. *IEEE Trans. on Information Theory,* Juin 2011, vol. 57 (6), 3567-3581